# EUROPEAN PATENT APPLICATION

(11) **EP 2 081 000 A1**
(43) Date of publication of application: **22.07.2009**
(21) Application number: 08103021.5
(22) Date of filing: 27.03.2008
(51) Int. Cl.: G01G 19/44, G01G 21/28, G01G 7/06, G01G 3/13, G01G 3/14

(54) **Pressure-sensing apparatus**

(30) Priority: 18.01.2008 TW 97101902
(71) Applicant: Industrial Technology Research Institute, Chu-Tung, Hsinchu (TW)
(72) Inventor: Ho, Chan Hsiao, 307, Cyonglin Township, Hsinchu County (TW); Chou, Chih Chung, 520, Tianjhong Township, Changhua County (TW); Chuang, Bor Nian, 407, Situn District, Taichung City (TW); Hsieh, Jung Ya, 406,, Beitun District, Taichung City (TW); Hsu, Chen Min, 300, East District, Hsinchu City (TW)
(74) Representative: 2K Patentanwälte Blasberg Kewitz & Reichel

(57) **Abstract**

A pressure-sensing apparatus includes a thin mat having a bottom pad and an upper pad configured to place a sample, a flexible display positioned in the mat and configured to display the sensing information of the sample, a flexible pressure-sensing module having a plurality of pressure sensor positioned in the mat in an array manner, a flexible signal-extracting circuit positioned in the mat and configured to extract the pressure signal from the pressure sensor, and a flexible controller positioned in the mat and configured to control the operation of the pressure-sensing apparatus.

## Description

### BACKGROUND OF THE INVENTION

### (A) Field of the Invention

The present invention relates to a pressure-sensing apparatus, and more particularly, to a flexible pressure-sensing apparatus with portable carrying advantage.

### (B) Description of the Related Art

Recently, there is increased widespread awareness of health as health protection information is discussed in mass media. In general, commercial medical instruments already provide some basic health parameters with very friendly operation interface. Obesity becomes a serious problem as eating, drinking, and working habits change, which not only alters the shape of the people but also causes chronic ailments. Consequently, body weight measuring has become one of the key indicators that can be frequently monitored to check one's health.

However, when one travels, the intermediate and final destinations many times do not have an accessible weight scale available. Virtually all of the presently available weight scales for home and office use are far too cumbersome to be carried along with other baggage and therefore the nervous tension which develops from not knowing one's body weight fluctuations heightens during the trip, which in many cases can ignite nervous appetites.

US 6,759,605 discloses a scale with structural mat, in which a platform scale cover is reinforced with one or more scale mats formed of a fiber filled polyester thermoset plastic material. The mats can be securely and rigidly fixed to scale covers using conventional mechanical fasteners. The fiber filled polyester can be molded with textures, colors and grain patterns, which closely simulate natural materials such as marble, granite and other stone and brick type materials. Sturdy mountings can be molded on the mats to facilitate mounting the mat to a scale platform.

### SUMMARY OF THE INVENTION

One aspect of the present invention provides a pressure-sensing apparatus with mats, which can be applied to the weight measurement of human beings, animals, or articles.

A pressure-sensing apparatus according to this aspect of the present invention comprises a mat including a bottom pad and an upper pad configured to place a sample, and a flexible electronic assembly positioned in the mat and configured to measure and display the weight of the sample. According one embodiment of the present invention, the flexible electronic assembly includes a flexible display positioned in the mat and configured to display the sensing information of the sample, a flexible pressure-sensing module including a plurality of pressure sensors positioned in the mat in an array manner, a flexible signal-extracting circuit positioned in the mat and configured to extract a pressure signal from the pressure sensors, and a flexible controller positioned in the mat and configured to control the operation of the pressure-sensing apparatus.

The pressure-sensing apparatus of the present invention encapsulates the flexible pressure sensors in the flexible soft material to form the mat for sensing the pressure distribution. As the sample is placed on the mat, the pressure-sensing apparatus uses the control circuit to extract the pressure signal of the pressure sensors in the mat, and transmits the pressure signal to the flexible controller for conducting the signal processing to generate the weight data of the sample from the pressure distribution information.

### BRIEF DESCRIPTION OF THE DRAWINGS

The objectives and advantages of the present invention will become apparent upon reading the following description and upon reference to the accompanying drawings in which:
FIG. 1 and FIG. 2 illustrate a pressure-sensing apparatus according to one embodiment of the present invention;
FIG. 3 illustrates a system block diagram of a pressure-sensing apparatus according to one embodiment of the present invention; and
FIG. 4 illustrates a system block diagram of a pressure-sensing apparatus according to another embodiment of the present invention.

### DETAILED DESCRIPTION OF THE INVENTION

The making and using of the presently embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

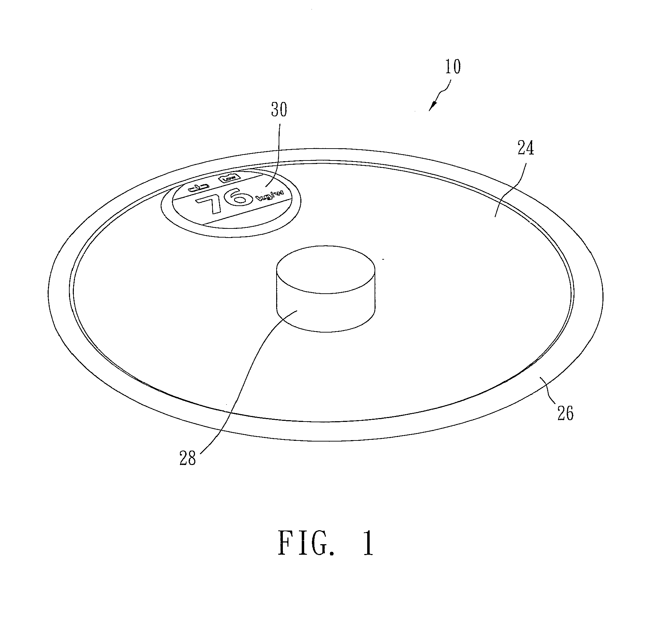

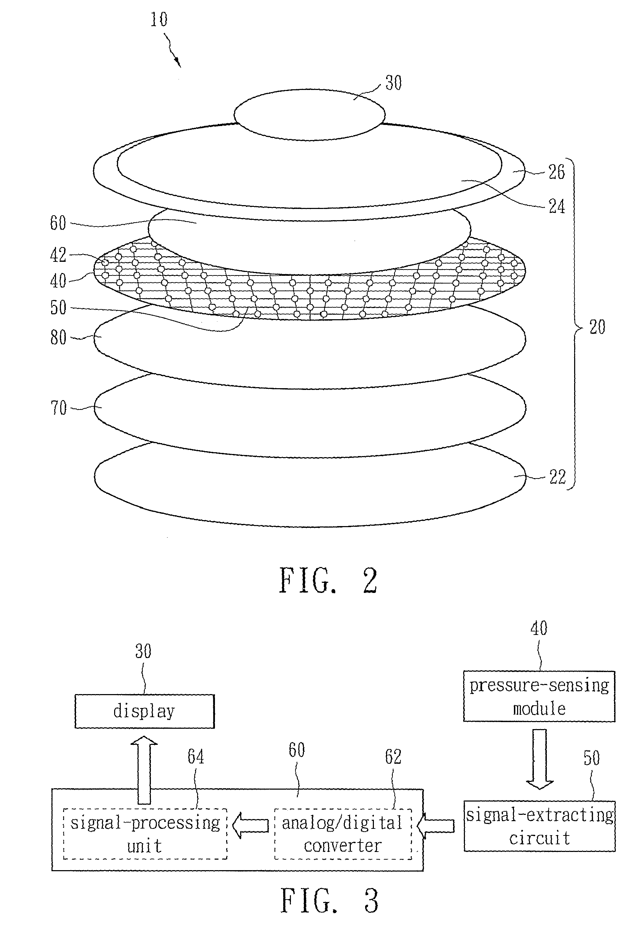

FIG. 1 and FIG. 2 illustrate a pressure-sensing apparatus 10 according to one embodiment of the present invention. The pressure-sensing apparatus 10 comprises a mat 20 including a bottom pad 22 and an upper pad 24 configured to place a sample 28, and a flexible electronic assembly positioned in the mat 20 and configured to measure and display the weight of the sample 28. The flexible electronic assembly includes a flexible display 30 positioned in the mat 20 and configured to display the sensing information of the sample 28, a flexible pressure-sensing module 40 including a plurality of pressure sensors 42 positioned in the mat 20 in an array manner, a flexible signal-extracting circuit 50 positioned in the mat 20 and configured to extract a pressure signal from the pressure sensor 42, and a flexible controller 60 positioned in the mat 20 and configured to control the operation of the pressure-sensing apparatus 10.

The mat 20 can be circular and flat, and the flexible display 30 can be circular. In addition, the mat 20 further includes an encapsulation member 26 configured to encapsulate peripherals of the bottom pad 22 and the upper pad 24. The pressure-sensing apparatus 10 may further include a flexible power supply 80 such as a thin flexible paper battery for supplying operation power of the pressure-sensing apparatus 10, i.e., the pressure-sensing apparatus 10 uses an internal power supply. Furthermore, the pressure-sensing apparatus 10 may further include a flexible electronic mat 70 positioned in the mat 20, and the flexible electronic mat 70 includes a plurality of conductive wires configured to deliver power from the flexible power supply 80 to the flexible display 30, the flexible pressure-sensing module 40, the flexible signal-extracting circuit 50 and the flexible controller 60.

In addition, the pressure-sensing apparatus 10 may use an electrical connector for using an external power supply. The flexible controller 60 may include a storage unit such as a flexible cache memory configured to store the sensing information of the sample 28. Furthermore, the flexible controller 60 can include an analog/digital converter 62 and a signal-processing unit 64, the analog/digital converter 62 is configured to convert the analog signal generated by the pressure sensor 42 into digital signals, and the signal-processing unit 64 can be a flexible microprocessor configured to generate the measurement results from the digital signals.

The pressure sensors 42 of the flexible pressure-sensing module 40 can be arranged with a resolution of four sensing points per square centimeter. The flexible pressure-sensing module 40 can be made of flexible material with a thickness smaller than 0.2 millimeter. The pressure sensor 42 can be pressure-capacitance transducers or pressure-resistance transducer, which transforms the sensed force into a variation of the capacitance or resistance and the variable capacitance or resistance represents the pressure value of each sensing point. In addition, the pressure sensors 42 of the flexible pressure-sensing module 40 can be piezoelectric sensors.

FIG. 3 illustrates a system block diagram of a pressure-sensing apparatus 10 according to one embodiment of the present invention. The analog pressure signal generated by the pressure sensors 42 of the flexible pressure-sensing module 40 can be extracted by the flexible signal-extracting circuit 50 and transmitted to the database in the storage unit of the flexible controller 60. Subsequently, the signal-processing unit 64 calculates the weight data from the pressure distribution information and transmits the weight data to the flexible display 30.

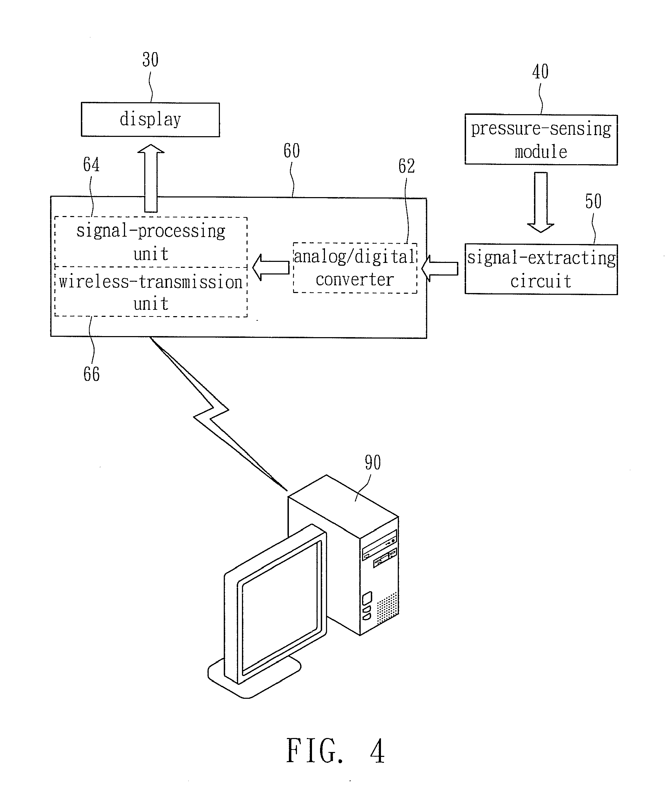

FIG. 4 illustrates a system block diagram of a pressure-sensing apparatus 10 according to another embodiment of the present invention. Compared to the pressure-sensing apparatus in FIG. 3, the flexible controller 60 of the pressure-sensing apparatus 10 in FIG. 4 further includes a wireless transmission unit 66. The wireless transmission unit 66 transmits the digital pressure signal to an external computer 90 for performing the signal processing to generate the pressure distribution chart, and for performing image-processing and display.

The pressure-sensing apparatus 10 of the present invention encapsulates the flexible pressure sensors 40 in the flexible soft material to form the mat 20 for sensing the pressure distribution. As the sample 28 is placed on the mat 20, the pressure-sensing apparatus 10 uses the control circuit to extract the pressure signal of the pressure sensors 40 in the mat 20, and transmits the pressure signal to the flexible controller 60 for conducting the signal-processing to generate the weight data of the sample 28 from the pressure distribution information.

It will be appreciated by those skilled in the art having the benefit of this disclosure that this invention provides an adjustable and versatile weight-measurement apparatus having numerous uses and applications. It should be understood that the drawings and detailed description herein are to be regarded in an illustrative rather than a restrictive manner, and are not intended to limit the invention to the particular forms and examples disclosed. On the contrary, the invention includes any further modifications, changes, rearrangements, substitutions, alternatives, design choices, and embodiments apparent to those of ordinary skill in the art, without departing from the spirit and scope of this invention, as defined by the following claims. Thus, it is intended that the following claims be interpreted to embrace all such further modifications, changes, rearrangements, substitutions, alternatives, design choices, and embodiments.

## Claims

1. A pressure-sensing apparatus, comprising:
a mat (20) including a bottom pad (22) and an upper pad (24) configured to place a sample (28);
a flexible electronic assembly positioned in the mat and configured to measure and display the weight data of the sample.

2. The pressure-sensing apparatus of Claim 1, wherein the mat (20) is circular.

3. The pressure-sensing apparatus of Claim 1 or 2, wherein the mat further includes an encapsulation member (26) configured to encapsulate peripherals of the bottom pad (22) and the upper pad (24).

4. The pressure-sensing apparatus of any of the preceding claims, wherein the flexible electronic assembly includes:
a flexible display (30) positioned in the mat and configured to display the sensing information of the sample;
a flexible pressure-sensing module (40) including a plurality of pressure sensors (42) positioned in the mat in an array manner;
a flexible signal-extracting circuit (50) positioned in the mat and configured to extract a pressure signal from the pressure sensor (42); and
a flexible controller (60) positioned in the mat and configured to control the operation of the pressure-sensing apparatus.

5. The pressure-sensing apparatus of Claim 4, wherein the flexible display is circular.

6. The pressure-sensing apparatus of Claim 4 or 5, further comprising a flexible power supply.

7. The pressure-sensing apparatus any of claims 4 to 6, wherein the flexible controller includes a storage unit.

8. The pressure-sensing apparatus of Claim 7, wherein the storage unit is a flexible cache memory.

9. The pressure-sensing apparatus of any of claims 4 to 8, wherein the flexible pressure-sensing module is a pressure-capacitance transducer.

10. The pressure-sensing apparatus of any of claims 4 to 9, wherein the flexible pressure-sensing module is a pressure-resistance transducer.

11. The pressure-sensing apparatus of any of claims 4 to 9, wherein the flexible pressure-sensing module is a piezoelectric sensor.

12. The pressure-sensing apparatus of any of claims 4 to 11, wherein the flexible controller includes a signal-processing unit.

13. The pressure-sensing apparatus of Claim 12, wherein the signal-processing unit is a flexible microprocessor.

14. The pressure-sensing apparatus of any of claims 4 to 13, wherein the flexible controller includes a wireless transmission unit (66) configured to transmit the pressure signal to an external signal-processing unit (90).

15. The pressure-sensing apparatus of any of claims 4 to 14, further comprising a flexible electronic mat positioned in the mat.
